# FASCICULE DE BREVET EUROPEEN

(11) **EP 1 978 740 B1**
(45) Date de publication et mention de la délivrance du brevet: **06.05.2015**
(21) Numéro de dépôt: 08103146.0
(22) Date de dépôt: 28.03.2008
(51) Int. Cl.: H04N 7/18

(54) **Dispositif optique comportant au moins deux capteurs, procédé de mise en oeuvre correspondant**
Optische Vorrichtung mit mindestens zwei Sensoren und entsprechendes Ausführungsverfahren
Optical device comprising at least two sensors, method of implementing same

(30) Priorité: 06.04.2007 FR 0754364
(43) Date de publication de la demande: 08.10.2008
(73) Titulaire: Sagem Défense Sécurité, 92100 Boulogne-Billancourt (FR)
(72) Inventeur: Berthault, Frédéric, 75015 Paris (FR); Bousquet, Marc, 75015 Paris (FR); Champeyroux, Jean-Marc, 75015 Paris (FR)
(74) Mandataire: Regimbeau

(56) Documents cités:
- EP-A2- 0 473 310
- WO-A-2005/125209
- US-A1- 2005 200 716
- US-A1- 2006 056 056
- RICHARD C. SIMMONS ET AL: "<title>The design of passively athermalized narrow- and wide-field-of-view infrared objectives for the OBSERVER unmanned air vehicle</title>", PROCEEDINGS OF SPIE, vol. 5612, 6 December 2004 (2004-12-06), pages 236-248, XP055147887, ISSN: 0277-786X, DOI: 10.1117/12.582510

## Description

### DOMAINE TECHNIQUE GENERAL

La présente invention concerne un dispositif optique d'observation ou de conduite de tir par exemple, et un procédé de mise en oeuvre du dispositif.

### ETAT DE L'ART

On connaît de nombreux dispositifs optiques d'observation ou de conduite de tir par exemple comme décrit par R. Simmons et al., "The design of passively a thermalized narrow and wide field of view infrared objectives for the OBSERVER unmanned air vehicle".

Ces dispositifs comportent avantageusement un zoom, soit optique soit numérique, mis en place dans un système d'imagerie.

Les dispositifs de l'art antérieur présentent ainsi des inconvénients.

Un zoom optique mécaniquement robuste est complexe à mettre en oeuvre, du fait de la présence de pièces mobiles pour faire varier la distance focale du dispositif. Des zooms optiques fiables (permettant une bonne stabilité de l'axe de visée du dispositif dans des environnements mécaniques et thermiques sévères) sont très onéreux.

Un zoom numérique souffre très rapidement d'une pixelisation de l'image lors de l'agrandissement de cette dernière, et la perte de résolution engendrée nuit à la qualité de l'observation ou de la conduite de tir.

### PRESENTATION DE L'INVENTION

L'invention propose de pallier au moins un de ces inconvénients.

A cet effet, on propose un dispositif optique selon la revendication 1 et un procédé selon la revendication 9.

L'invention est avantageusement complétée par les caractéristiques suivantes, prises seules ou en une quelconque de leur combinaison techniquement possible :
- le contrôleur comporte un zoom numérique pour modifier lesdites tailles ;
- le média est situé en sortie du contrôleur et est un dispositif d'affichage, de compression de stockage ou de transmission ;
- les capteurs ont la même résolution spatiale ;
- chaque capteur a une résolution spatiale différente des autres capteurs ;
- le contrôleur ré-échantillonne les parties des images pour les adapter à la résolution angulaire de l'image finale en fonction de la valeur de champ angulaire sélectionnée ;
- le contrôleur est adapté pour recaler individuellement les parties des images en corrigeant les erreurs sur la distance focale réelle, et/ou les effets de la distorsion, et/ou les écarts entre les lignes de visée des capteurs et/ou les éventuelles différences de contraste et/ou de colorimétrie ;
- chaque capteur a un champ angulaire différent du champ angulaire des autres capteurs ; et
- le dispositif comporte au moins trois capteurs.

La présente invention concerne également un procédé de mise en oeuvre du dispositif.

L'invention présente de nombreux avantages.

Le dispositif ne comporte aucune pièce mobile et est donc robuste par rapport aux zooms optiques de l'art antérieur.

Le dispositif comporte un zoom continu, avec une qualité d'image dans une zone d'intérêt supérieure ou égale à celle des zooms optiques de même amplitude de l'art antérieur, à résolution spatiale de capteur égale.

Le dispositif est peu onéreux.

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :
- La figure 1 est une représentation schématique d'un exemple d'un dispositif selon l'invention ;
- La figure 2 est une représentation schématique d'une image finale affichée sur un afficheur d'un dispositif selon l'invention ;
- Les figures 3A et 3B sont des représentations schématiques d'images issues de capteurs d'un dispositif selon l'invention ;
- Les figures 4A et 4B représentent schématiquement la fonction zoom sur une image finale affichée sur un dispositif selon l'invention ; et
- La figure 5 est une représentation schématique d'une image finale affichée sur un afficheur d'un dispositif selon l'invention, le dispositif comportant trois capteurs.

Sur l'ensemble des figures, les éléments similaires portent des références numériques identiques.

### DESCRIPTION DETAILLEE

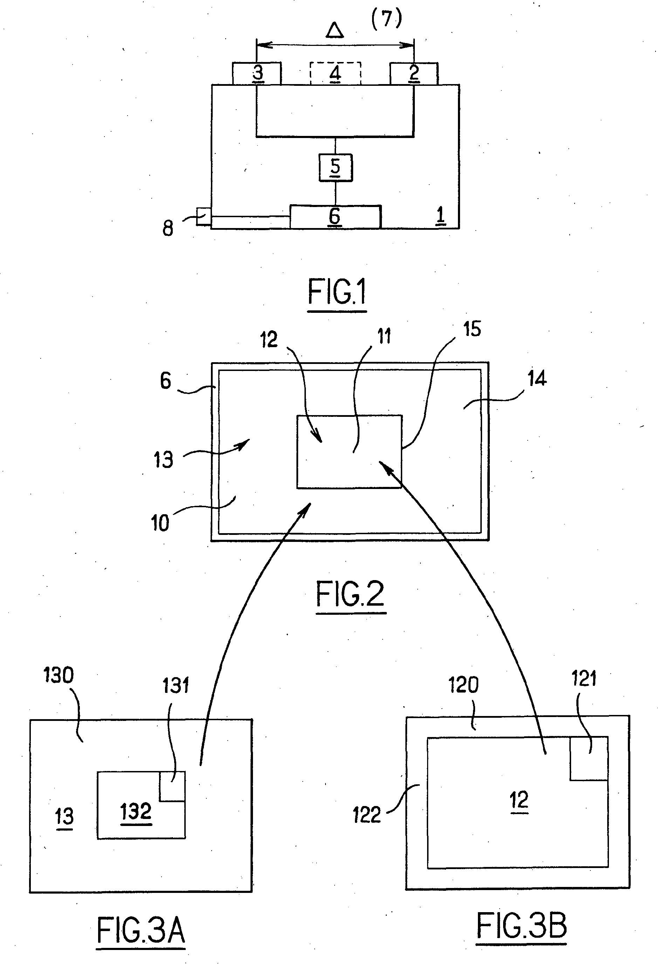

La figure 1 représente schématiquement un dispositif optique d'imagerie 1 comportant :
- au moins deux capteurs d'images 2 et 3 ;
- un contrôleur 5 en sortie des deux capteurs 2 et 3 ; et
- un média de sortie 6 pour exploiter une image finale 10 générée par le contrôleur 5, le média 6 étant situé en sortie du contrôleur 5.

On appelle « média » toute forme de support physique et électronique utilisée pour la diffusion de données. Le média 6 peut ainsi être, par exemple, un dispositif d'affichage, de compression, de stockage ou de transmission.

Dans le présent dispositif, la notion de « capteur » est entendue comme comprenant une voie optique et un dispositif d'échantillonnage spatial d'une scène 7 perçue à travers ladite voie.

La résolution angulaire d'un capteur est une fonction du champ angulaire de l'optique et de la résolution spatiale du dispositif d'échantillonnage spatial de la scène.

Chaque capteur est adapté pour observer la même scène 7 que les autres capteurs, mais à une résolution angulaire différente des autres capteurs. Dans le présent dispositif, les capteurs de résolution angulaire importante ont un champ angulaire plus petit que les capteurs à plus faible résolution angulaire. Dans notre exemple, le capteur ayant la résolution angulaire la plus importante est le capteur 2. Le capteur 3 a une résolution angulaire plus faible, mais un champ angulaire plus important.

Comme le montrent les figures 2, 3A et 3B, le contrôleur 5 est adapté pour positionner :
- dans une zone centrale 11 de l'image finale reconstituée 10, une partie centrale 12 d'une image 120 issue du capteur 2 ayant la meilleure résolution angulaire parmi les capteurs ; et
- dans une zone 14 périphérique de l'image finale 10, une partie périphérique 13 d'une image 130 issue du capteur 3 ayant la meilleure résolution angulaire parmi les capteurs observant une zone périphérique correspondante de la scène 7.

Comme le montre la figure 3B, la partie centrale 12 de l'image 120 issue du capteur 2 est généralement constituée de la totalité ou de la quasi-totalité de l'image 120.

Ainsi l'image finale 10 est constituée par des zones 11 et 14 contenant la partie 12 et la partie 13 respectivement de l'image 120 et de l'image 130 issues des capteurs 2 et 3.

Pour les applications de la présente invention, on considère avantageusement que la zone centrale 11 de l'image finale constitue une zone d'intérêt pour l'utilisateur. La zone 14, située en périphérie de la zone d'intérêt, présente moins d'intérêt et peut donc s'accommoder d'une résolution angulaire plus faible, sans amoindrir les performances attendues du dispositif. Ainsi, la partie la plus résolue angulairement est toujours positionnée en zone centrale 11 de l'image finale 10, car la zone centrale 11 correspond à la zone d'intérêt pour l'utilisateur. La partie la moins résolue angulairement est positionnée en zone périphérique 14 de l'image finale 10. Cependant, même si l'on place des parties des images issues des capteurs, de la zone centrale à la périphérie de l'image finale, par ordre décroissant de résolution angulaire, on prend soin de prendre pour chaque zone la résolution angulaire la plus élevée disponible.

Le dispositif 1 comporte en outre un sélecteur 8 de champ angulaire, pour permettre à un utilisateur du dispositif de sélectionner une partie plus ou moins étendue de la scène autour de la direction commune de visée des capteurs, pour constituer l'image finale 10 à transférer vers le média de sortie 6. On comprend que la taille de cette partie de scène correspond à une valeur de champ angulaire pour l'image 10. La variation de la valeur de champ angulaire permet de sélectionner la variation de l'agrandissement de l'image finale 10, c'est à dire d'activer la fonction zoom. On comprend aussi que les proportions de la zone centrale 11 et des zones périphériques 14 sont à ré-évaluer en fonction de la valeur du champ angulaire choisi. Ainsi le sélecteur 8 de champ angulaire permet à un utilisateur de sélectionner une valeur de taille pour l'image finale 10 à transférer vers le média de sortie 6, le contrôleur 5 étant adapté pour modifier les tailles respectives de la zone centrale 11 et de chaque zone périphérique 14 de l'image finale en fonction de ladite valeur sélectionnée.

La résolution spatiale de l'image 10 étant figée par les caractéristiques du média 6, on comprend que l'utilisation du sélecteur 8 modifie, en même temps que le champ angulaire couvert par l'image 10, la résolution angulaire de l'image 10.

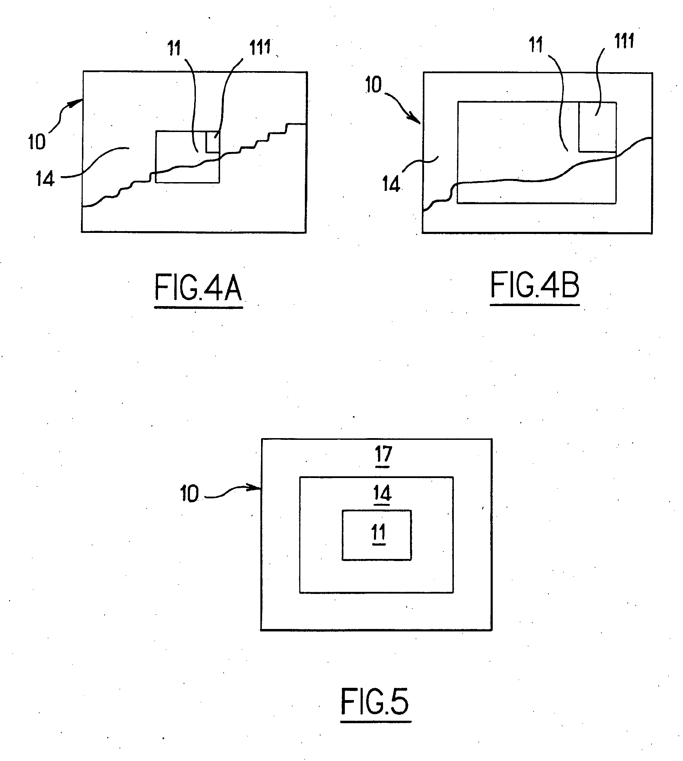

Ainsi, la figure 4A montre que l'image finale 10 est affichée pour une première valeur de champ angulaire. La zone centrale 11 a donc une première taille. Lorsque l'utilisateur choisit une deuxième valeur de champ angulaire, inférieure par exemple (agrandissement), le contrôleur 5 modifie la taille de la zone centrale pour l'agrandir, ce qui correspond à la figure 4B.

Très préférentiellement, le contrôleur 5 est en outre adapté pour reconstituer l'image finale 10 en utilisant, pour chaque zone 11 ou 14 de l'image finale 10, la résolution angulaire la plus élevée disponible à partir des capteurs observant une zone correspondante de la scène. Ainsi, pour la zone 111 des figures 4A et 4B, la partie 121 du capteur 2 le plus résolu angulairement est utilisée, au lieu de la zone 131 du capteur 3 le moins résolu angulairement.

Le transfert des informations entre la partie 12 de l'image du capteur 2 et la zone centrale 11 de l'image finale 10 requiert du contrôleur 5 qu'il convertisse l'information dans la partie 12, disponible avec la résolution angulaire du capteur 2, vers la résolution angulaire de l'image 10. De même, il doit convertir l'information prise dans la partie 13, disponible avec la résolution angulaire du capteur 3, vers la résolution angulaire de l'image 10.

La modification de la taille et de la résolution angulaire des zones s'effectue avantageusement grâce à un zoom numérique du contrôleur 5. La fonction zoom numérique est connue de l'homme du métier et n'est pas reprise dans la présente description.

Lors de l'agrandissement ou de la réduction des images par le zoom numérique, le contrôleur 5 ré-échantillonne chaque zone de l'image finale 10 en fonction de la résolution angulaire et/ou spatiale attendue de l'image de sortie. Pour éviter un repliement de spectre, toute réduction d'image est précédée d'un filtrage passe-bas correctement dimensionné.

Le raccord, sur l'image finale 10, entre la zone centrale 11 (correspondant à la partie 12 issue de l'image 120) et la zone périphérique 14 (correspondant à la partie périphérique 13 de l'image 130) peut, dans certaines applications, ne pas être critique. II peut alors être masqué à l'aide d'un cadre 15 visible, comme le montre la figure 2.

En outre, le raccord peut être rendu pratiquement imperceptible, si le contrôleur 5 est adapté pour recaler individuellement les différentes parties sélectionnées des images 120 et 130 en corrigeant les erreurs sur la distance focale réelle, et/ou les effets de la distorsion, et/ou les écarts angulaires et/ou de parallaxe entre les lignes de visée des capteurs et/ou en corrigeant les éventuelles différences de contraste et/ou de colorimétrie entre les parties d'image provenant des différents capteurs. Ce type de correction permettant un raccord pratiquement imperceptible est connu de l'homme du métier.

Selon l'invention, le capteur 2 ayant la plus forte résolution angulaire parmi les capteurs est un capteur monochrome, et les autres capteurs sont des capteurs polychromes.

Avantageusement, le capteur monochrome a une résolution spatiale plus importante qu'un capteur polychrome de même champ, ce qui augmente la qualité de l'image au niveau de la zone d'intérêt positionnée au centre de l'image finale. Les capteurs polychromes périphériques permettent quant à eux un confort d'observation à l'utilisateur.

La monochromie au centre de l'image finale peut cependant être gênante pour l'utilisateur, qui peut souhaiter un confort d'observation sur l'ensemble de l'image finale.

Par conséquent, selon l'invention, le contrôleur 5 est adapté pour appliquer la chrominance de la partie centrale 132 de l'image 130 - issue du capteur polychrome 3 ayant la résolution angulaire la plus importante parmi les capteurs couvrant la zone correspondante de la scène - à la zone centrale 11 de l'image finale 10. La zone centrale 11 est la partie initialement monochrome et correspondant à la partie centrale 12 de l'image 120 issue du capteur monochrome 2 ayant la résolution angulaire la plus élevée parmi les capteurs. On utilise alors la chrominance de la partie 132 de l'image 130 pour coloriser, même de façon grossière, la zone centrale 11 de l'image finale, initialement monochrome.

La figure 1 montre qu'un troisième capteur 4 peut également être mis en place sur le dispositif. Le nombre de capteurs peut en fait être quelconque. Les développements qui précèdent restent cependant applicables : les parties des images issues des capteurs sont positionnées par ordre décroissant de résolution angulaire, de la zone centrale vers la zone périphérique dans l'image finale, mais en prenant pour chaque zone 11, 14 et 17 la résolution angulaire la plus élevée disponible, comme le montre la figure 5.

Les capteurs peuvent être sensibles dans le domaine visible ou dans l'infrarouge par exemple, et opèrent généralement dans la même bande spectrale sans que cela soit limitatif, un capteur pouvant par exemple être sensible dans le domaine visible, et un autre dans le domaine infrarouge.

## Revendications

1. Dispositif optique (1), comportant :
- plusieurs capteurs (2, 3, 4) d'images (120, 130) observant une même scène en ayant une direction commune de visée, ainsi que des champs et résolutions angulaires différents ;
- un média de sortie (6) pour exploiter une image finale (10) constituée :
∘ dans une zone centrale (11) de ladite image finale, par une image (120) issue du capteur (2) ayant la résolution angulaire la plus élevée parmi les capteurs ;
∘ dans une zone périphérique, par une partie périphérique (13) d'une image (130) issue d'un capteur (3) ayant la résolution angulaire la moins élevée ;
**caractérisé en ce qu'**il comporte
- un sélecteur (8) de champ angulaire adapté pour permettre à un utilisateur de sélectionner une valeur de champ angulaire pour l'image finale,
- un contrôleur adapté pour constituer l'image finale correspondant à cette valeur de champ angulaire à partir des images issues des différents capteurs
∘ les parties d'image issues des différents capteurs et utilisées pour constituer les différentes zones de l'image finale correspondant à des capteurs ayant une résolution angulaire décroissante de la zone centrale vers la périphérie de l'image finale,
∘ ledit contrôleur utilisant, pour chaque zone de l'image finale, une partie d'image issue du capteur ayant la résolution angulaire la plus élevée parmi les capteurs observant la zone de scène qui correspond à ladite zone d'image,
ledit contrôleur étant adapté pour modifier les tailles respectives des différentes zones de l'image finale en fonction de la valeur sélectionnée pour le champ angulaire de l'image finale,
et **en ce que** le capteur (2) ayant la résolution angulaire la plus élevée parmi les capteurs est un capteur monochrome, les autres capteurs (3) étant polychromes, le contrôleur (5) étant adapté pour appliquer la chrominance de la partie centrale (132) d'une image (130) issue d'un capteur (2) polychrome à la zone centrale (11) de l'image finale (10).

2. Dispositif selon la revendication 1, dans lequel le contrôleur (5) comporte un zoom numérique pour modifier lesdites tailles.

3. Dispositif selon l'une des revendications 1 ou 2, dans lequel le média (6) est situé en sortie du contrôleur (5) et est un dispositif d'affichage, de compression de stockage ou de transmission.

4. Dispositif selon l'une des revendications 1 à 3, dans lequel les capteurs ont la même résolution spatiale.

5. Dispositif selon l'une des revendications 1 à 3, dans lequel chaque capteur a une résolution spatiale différente des autres capteurs.

6. Dispositif selon l'une des revendications 1 à 5, dans lequel le contrôleur (5) ré-échantillonne les parties (12, 13) des images (120, 130) pour les adapter à la résolution angulaire de l'image finale (10) en fonction de ladite valeur sélectionnée.

7. Dispositif selon l'une des revendications 1 à 6, dans lequel le contrôleur (5) est adapté pour recaler individuellement les parties des images en corrigeant les erreurs sur la distance focale réelle, et/ou les effets de la distorsion, et/ou les écarts angulaires et/ou de parallaxe entre les lignes de visée des capteurs et/ou les éventuelles différences de contraste et/ou de colorimétrie.

8. Dispositif selon l'une des revendications 1 à 7, comportant au moins trois capteurs.

9. Procédé d'observation d'une scène (7), grâce à un dispositif optique (1) comportant :
- plusieurs capteurs (2, 3, 4) d'images (120, 130) observant une même scène en ayant une direction commune de visée, ainsi que des champs et résolutions angulaires différents ;
- un média de sortie (6) pour exploiter une image finale (10) constituée :
∘ dans une zone centrale (11) de ladite image finale, par une image (120) issue du capteur (2) ayant la résolution angulaire la plus élevée parmi les capteurs ;
∘ dans une zone périphérique, par une partie périphérique (13) d'une image (130) issue d'un capteur (3) ayant la résolution angulaire la moins élevée ;
- un contrôleur (5), et
- un sélecteur (8) de champ angulaire,
le procédé comportant les étapes :
- d'observation d'une scène (7) par les capteurs (2, 3, 4) ;
- d'élaboration d'une image finale (10) destinée au média (6), l'image finale étant constituée par des zones (11, 14) contenant des parties (12, 13) des images (120, 130) issues des capteurs ;
le procédé étant **caractérisé en ce que**, un sélecteur (8) de champ angulaire étant adapté pour permettre à un utilisateur de sélectionner une valeur de champ angulaire pour l'image finale, le contrôleur (5) :
- constitue l'image finale correspondant à cette valeur de champ angulaire à partir des images issues des différents capteurs,
∘ les parties d'image issues des différents capteurs et utilisées pour constituer les différentes zones de l'image finale correspondant à des capteurs ayant une résolution angulaire décroissante de la zone centrale vers la périphérie de l'image finale,
∘ ledit contrôleur utilisant pour chaque zone de l'image finale, une partie d'image issue du capteur ayant la résolution angulaire la plus élevée parmi les capteurs observant la zone de scène qui correspond à ladite zone d'image,
- modifie les tailles respectives des différentes zones de l'image finale en fonction de la valeur sélectionnée pour le champ angulaire de l'image finale.
et **en ce que**, le capteur (2) ayant la résolution angulaire la plus élevée parmi les capteurs étant un capteur monochrome, les autres capteurs (3) étant polychromes, le contrôleur (5) applique la chrominance de la partie centrale (132) d'une image (130) issue d'un capteur (2) polychrome à la zone centrale (11) de l'image finale (10).

10. Procédé selon l'une des revendications 9, comportant une étape de ré-échantillonnage, par le contrôleur (5), des parties (12, 13) des images (120, 130) en fonction de ladite valeur sélectionnée pour l'image finale (10).

11. Procédé selon l'une des revendications 9 ou 10, comportant une étape de recalage individuel des parties des images, par le contrôleur (5), en corrigeant les erreurs sur la distance focale réelle, et/ou les effets de la distorsion, et/ou les écarts angulaires et/ou de parallaxe entre les lignes de visée des capteurs , et/ou les éventuelles différences de contraste et/ou de colorimétrie.

## Patentansprüche

1. Optische Vorrichtung (1), umfassend:
- mehrere Sensoren (2, 3, 4) für Bilder (120, 130), die eine selbe Szene beobachten, indem sie eine gemeinsame Blickrichtung sowie unterschiedliche Winkelbereiche und Winkelauflösungen haben;
- ein Ausgangsmedium (6) zum Auswerten eines fertigen Bildes (10), das gebildet ist
o in einer mittleren Zone (11) des fertigen Bildes durch ein Bild (20), das von dem Sensor (2) unter den Sensoren stammt, der die höchste Winkelauflösung hat;
o in einer Randzone durch einen Randteil (13) eines Bildes (130), das von einem Sensor (3) stammt, der die niedrigste Winkelauflösung hat;
**dadurch gekennzeichnet, dass** sie Folgendes umfasst:
- ein Winkelbereichs-Auswahlmittel (8), das angepasst ist, um einem Benutzer die Auswahl eines Winkelbereichswertes für das fertige Bild zu ermöglichen,
- einen Controller, der angepasst ist, um ausgehend von den Bildern, die von den verschiedenen Sensoren stammen, das fertige Bild zu bilden, das diesem Winkelbereichswert entspricht,
∘ wobei die Bildteile, die von den verschiedenen Sensoren stammen und zur Bildung der verschiedenen Zonen des fertigen Bildes verwendet werden, Sensoren mit einer Winkelauflösung entsprechen, die von der mittleren Zone zu dem Rand des fertigen Bildes hin abnimmt,
∘ wobei der Controller für jede Zone des fertigen Bildes einen Bildteil verwendet, der von dem Sensor unter den Sensoren, welche die Szenenzone, die der Bildzone entspricht, beobachten, mit der höchsten Winkelauflösung stammt,
wobei der Controller angepasst ist, um die jeweiligen Größen der verschiedenen Zonen des fertigen Bildes in Abhängigkeit von dem Wert, der für den Winkelbereich des fertigen Bildes ausgewählt wurde, zu verändern,
und dass der Sensor (2) unter den Sensoren, der die höchste Winkelauflösung hat, ein Monochromsensor ist, wobei die anderen Sensoren (3) Polychromsensoren sind, wobei der Controller (5) angepasst ist, um die Farbigkeit des mittleren Teils (132) eines Bildes (130), der von einem Polychromsensor (2) stammt, an die mittlere Zone (11) des fertigen Bildes (10) anzuwenden.

2. Vorrichtung nach Anspruch 1, wobei der Controller (5) ein digitales Zoom aufweist, um die Größen zu verändern.

3. Vorrichtung nach einem der Ansprüche 1 oder 2, wobei das Medium (6) am Ausgang des Controllers (5) angeordnet ist und eine Vorrichtung zum Anzeigen, Komprimieren, Speichern oder Senden ist.

4. Vorrichtung nach einem der Ansprüche 1 bis 3, wobei die Sensoren die selbe Raumauflösung haben.

5. Vorrichtung nach einem der Ansprüche 1 bis 3, wobei jeder Sensor eine Raumauflösung hat, die von den anderen Sensoren verschieden ist.

6. Vorrichtung nach einem der Ansprüche 1 bis 5, wobei der Controller (5) die Teile (12, 13) der Bilder (120, 130) resampelt, um sie in Abhängigkeit von dem ausgewählten Wert an die Winkelauflösung des fertigen Bildes (10) anzupassen.

7. Vorrichtung nach einem der Ansprüche 1 bis 6, wobei der Controller (5) angepasst ist, um die Teile der Bilder einzeln nachzustellen, indem er die Fehler in der tatsächlichen Brennweite und/oder die Verzerrungseffekte und/oder die Winkelabstände und/oder die Parallaxabstände zwischen den Ziellinien der Sensoren und/oder die eventuellen Kontrastdifferenzen und/oder Kolorimetriedifferenzen korrigiert.

8. Vorrichtung nach einem der Ansprüche 1 bis 7, die mindestens drei Sensoren umfasst.

9. Verfahren zum Beobachten einer Szene (7) mit Hilfe einer optischen Vorrichtung (1), die Folgendes umfasst:
- mehrere Sensoren (2, 3, 4) für Bilder (120, 130), die eine selbe Szene beobachten, indem sie eine gemeinsame Blickrichtung sowie unterschiedliche Winkelbereiche und Winkelauflösungen haben;
- ein Ausgangsmedium (6) zum Auswerten eines fertigen Bildes (10), das gebildet ist
∘ in einer mittleren Zone (11) des fertigen Bildes durch ein Bild (20), das von dem Sensor (2) unter den Sensoren stammt, der die höchste Winkelauflösung hat;
∘ in einer Randzone durch einen Randteil (13) eines Bildes (130), das von einem Sensor (3) stammt, der die niedrigste Winkelauflösung hat;
- einen Controller (5), und
- ein Winkelbereichs-Auswahlmittel (8),
wobei das Verfahren die folgenden Schritte umfasst:
- Beobachten einer Szene (7) durch die Sensoren (2, 3, 4);
- Erstellen eines fertigen Bildes (10), das für das Medium (6) bestimmt ist, wobei das fertige Bild von Zonen (11, 14) gebildet ist, die Teile (12, 13) der Bilder (120, 130) enthalten, die von den Sensoren stammen;
wobei das Verfahren **dadurch gekennzeichnet ist, dass**, da ein Winkelbereichs-Auswahlmittel (8) angepasst ist, um einem Benutzer die Auswahl eines Winkelbereichswertes für das fertige Bild zu ermöglichen, der Controller (5)
- ausgehend von den Bildern, die von den verschiedenen Sensoren stammen, das fertige Bild bildet, das diesem Winkelbereichswert entspricht,
∘ wobei die Bildteile, die von den verschiedenen Sensoren stammen und zur Bildung der verschiedenen Zonen des fertigen Bildes verwendet werden, Sensoren mit einer Winkelauflösung entsprechen, die von der mittleren Zone zu dem Rand des fertigen Bildes hin abnimmt,
∘ wobei der Controller für jede Zone des fertigen Bildes einen Bildteil verwendet, der von dem Sensor unter den Sensoren, welche die Szenenzone, die der Bildzone entspricht, beobachten, stammt, der die höchste Winkelauflösung hat,
- die jeweiligen Größen der verschiedenen Zonen des fertigen Bildes in Abhängigkeit von dem Wert, der für den Winkelbereich des fertigen Bildes aus gewählt wurde, verändert,
und dass, da der Sensor (2) unter den Sensoren, der die höchste Winkelauflösung hat, ein Monochromsensor ist, wobei die anderen Sensoren (3) Polychromsensoren sind, der Controller (5) die Farbigkeit des mittleren Teils (132) eines Bildes (130), der von einem Polychromsensor (2) stammt, auf die mittlere Zone (11) des fertigen Bildes (10) anwendet.

10. Verfahren nach Anspruch 9, das einen Schritt des Resampling, durch den Controller (5), der Teile (12, 13) der Bilder (120, 130) in Abhängigkeit von dem für das fertige Bild (10) ausgewählten Wert umfasst.

11. Verfahren nach einem der Ansprüche 9 oder 10, das einen Schritt der einzelnen Nachstellung der Teile der Bilder, durch den Controller (5), umfasst, indem er die Fehler in der tatsächlichen Brennweite und/oder die Verzerrungseffekte und/oder die Winkelabstände und/oder die Parallaxabstände zwischen den Ziellinien der Sensoren und/oder die eventuellen Kontrastdifferenzen und/oder Kolorimetriedifferenzen korrigiert.

## Claims

1. Optical device (1), comprising:
- a plurality of image (120, 130) sensors (2, 3, 4) observing the same scene having a common sighting direction, and different angular fields and resolutions:
- an output medium (6) for processing a final image (10) consisting:
∘ in a central area (11) of said final image, of an image (120) obtained from the sensor (2) having the highest angular resolution of the sensors;
∘ in a peripheral area, of a peripheral part (13) of an image (130) obtained from a sensor (3) having the lowest angular resolution;
**characterised in that** it comprises
- an angular field selector (8) suitable for enabling a user to select an angular field value for the final image,
- a controller suitable for forming the final image corresponding to this angular field value based on the images obtained from the various sensors
∘ parts of images obtained from the various sensors and used for forming the various areas of the final image corresponding to sensors having a decreasing angular resolution from the central area to the periphery of the final image,
∘ said controller using, for each area of the final image, a part of an image obtained from the sensor having the highest angular resolution of the sensors observing the scene area corresponding to said image area,
said controller being suitable for modifying the respective sizes of the various areas of the final image based on the value selected for the angular field of the final image,
and **in that** the sensor (2) having the highest angular resolution of the sensors is a monochrome sensor, the other sensors (3) being polychrome, the controller (5) being suitable for applying the chrominance of the central part (132) of an image (130) obtained from a polychrome sensor (2) to the central area (11) of the final image (10).

2. Device according to claim 1, wherein the controller (5) comprises a digital zoom to modify said sizes.

3. Device according to any of claims 1 or 2, wherein the medium (6) is situated at the output of the controller (5) and is a display, storage compression or transmission device.

4. Device according to any of claims 1 to 3, wherein the sensors have the same spatial resolution.

5. Device according to any of claims 1 to 3, wherein each sensor has a different spatial resolution to the other sensors.

6. Device according to any of claims 1 to 5, wherein the controller (5) resamples the parts (12, 13) of the images (120, 130) in order to adapt said image to the angular resolution of the final image (10) based on said selected value.

7. Device according to any of claims 1 to 6, wherein the controller (5) is suitable for individually aligning the parts of the images by correcting errors on the actual focal distance, and/or distortion effects, and/or angular deviations and/or parallax between the lines of sight of the sensors and/or any differences in contrast and/or colorimetry.

8. Device according to any of claims 1 to 7, comprising at least three sensors.

9. Method for observing a scene (7), using an optical device (1) comprising:
- a plurality of image (120, 130) sensors (2, 3, 4) observing the same scene having a common sighting direction, and different angular fields and resolutions:
- an output medium (6) for processing the final image (10) consisting:
∘ in a central area (11) of said final image, of an image (120) obtained from the sensor (2) having the highest angular resolution of the sensors;
∘ in a peripheral area, of a peripheral part (13) of an image (130) obtained from a sensor (3) having the lowest angular resolution;
- a controller (5), and
- an angular field selector (8),
the method comprising steps of :
- observing a scene (7) using the sensors (2, 3, 4);
- preparing a final image (10) intended for the medium (6), the final image consisting of areas (11, 14) containing parts (12, 13) of the images (120, 130) obtained from the sensors;
the method being **characterised in that**, an angular field selector (8) being suitable for enabling a user to select an angular field value for the final image, the controller (5):
- forms the final image corresponding to this angular field value based on the images obtained from the various sensors,
∘ parts of images obtained from the various sensors and used for forming the various areas of the final image corresponding to sensors having a decreasing angular resolution from the central area to the periphery of the final image,
∘ said controller using, for each area of the final image, a part of an image obtained from the sensor having the highest angular resolution of the sensors observing the scene area corresponding to said image area,
- modifies the respective sizes of the various areas of the final image as a function of the value selected for the angular field of the final image,
and **in that**, the sensor (2) having the highest angular resolution of the sensors being a monochrome sensor, the other sensors (3) being polychrome, the controller (5) applies the chrominance of the central part (132) of an image (130) obtained from a polychrome sensor (2) to the central area (11) of the final image (10).

10. Method according to claim 9, comprises a step for resampling, using the controller (5), the parts (12, 13) of the images (120, 130) based on said value selected for the final image (10).

11. Method according to any of claims 9 or 10, comprising a step for individually aligning the parts of the images, using the control (5), by correcting errors on the actual focal distance, and/or distortion effects, and/or angular deviations and/or parallax between the lines of sight of the sensors and/or any differences in contrast and/or colorimetry.
